**Europäisches Patentamt**

**European Patent Office**

**Office européen des brevets**

(11) Numéro de publication: **0 161 121**
**B1**

(12) **FASCICULE DE BREVET EUROPÉEN**

(45) Date de publication du fascicule du brevet:
**20.05.87**

(21) Numéro de dépôt: **85400356.3**

(22) Date de dépôt: **26.02.85**

(51) Int. Cl.⁴: **H 02 G 7/05**

(54) Dispositif à déformation contrôlée pour la protection des lignes électriques contre les surcharges dues aux intempéries.

(30) Priorité: **05.03.84 FR 8403502**

(43) Date de publication de la demande:
**13.11.85 Bulletin 85/46**

(45) Mention de la délivrance du brevet:
**20.05.87 Bulletin 87/21**

(84) Etats contractants désignés:
**AT CH DE FR GB IT LI SE**

(56) Documents cité:
**DE-A-1 615 702**
**DE-B-1 154 540**
**FR-A-2 364 371**
**US-A-3 568 806**

(73) Titulaire: **USINES METALLURGIQUES L.C.A.B.**
**Société anonyme, 42, rue de la Meuse, F-08120**
**Bogny- Sur- Meuse (FR)**

(72) Inventeur: **Balteau, Jacques, 6, rue du Pré St-**
**Ange, F-80000 Charleville- Mezieres (FR)**
Inventeur: **Henry, Bernard, 42, rue de la Meuse,**
**F-08120 Bogny- Sur- Meuse (FR)**

(74) Mandataire: **Gérardin, Robert Jean René, Cabinet**
**Robert Gérardin 3A, avenue Georges**
**Clémenceau Boîte Postale 2 719, F-51055 Reims**
**Cédex (FR)**

## Description

Le dispositif selon l'invention, est destiné à équiper les armatures des poteaux supportant les lignes électriques à basse, moyenne et haute tension en vue d'assurer leur protection.

Les armatures supportant les lignes sont généralement constituées d'un ou de plusieurs profilés métalliques, fixés en tête des poteaux.

Ces armatures, constituées de profilés laminés du commerce, sont renforcées pour leur permettre de résister à la tension des conducteurs, lors du montage des lignes et, en utilisation, lors de surcharges supplémentaires dues au vent, à la neige ou au verglas. Toutefois, ces surcharges peuvent générer des contraintes de traction supérieures à la résistance des conducteurs ou des poteaux et provoquer leur rupture: ce qui a pour conséquence d'interrompre le passage du courant et de nécessiter des travaux de remise en état assez coûteux.

Pour remédier à cette situation, il a été prévu de monter, entre les armatures et les lignes, des dispositifs permettant de réduire les contraintes exercées sur les conducteurs et les poteaux, en diminuant la tension exercée par les lignes par augmentation de la flèche des conducteurs entre les poteaux.

De tels dispositifs sont décrits dans les demandes de brevet français:
- FR-A-2.344.991, 2.379.927, 2.407.591 et 2.466.888, ayant pour objet des armatures déformables.
- FR-A-1.215.585, ayant pour objet un régulateur automatique de tension pour lignes aériennes, destiné à compenser l'allongement ou la contraction d'une ligne par la dilatation et la contraction d'un liquide contenu dans une chambre fermée.

Les armatures déformables, si elles permettent effectivement d'éviter la rupture des poteaux, exigent cependant leur remplacement après déformation, ce qui se traduit par des travaux pénibles et coûteux.

Le régulateur automatique de tension permet le maintien d'une certaine flèche sur les conducteurs pour des surcharges supplémentaires assez limitées, mais n'offre pas une garantie suffisante pour les surcharges exceptionnelles dues notamment à la neige ou au verglas.

Le dispositif à déformation contrôlée selon l'invention, vise à pallier les inconvénients précédemment cités, en protégeant à la fois les poteaux, les armatures et les conducteurs tout en permettant un réarmement sans démontage dans des conditions particulièrement économiques.

Ce dispositif, permettant de réduire les contraintes exercées sur les conducteurs et les poteaux de lignes électriques par détensionnement des conducteurs et augmentation de leur flèche entre les poteaux, se caractérise principalement en ce qu'il est constitué de quatre bras articulés deux à deux pour former deux compas dont l'écartement des branches, sous l'action de la tension des fils ou câbles, est contrôlée par l'allongement en traction d'une tige à section calibrée et par l'allongement et la rupture de deux bretelles fusibles et en ce qu'il comporte un moyen de visualisation à distance de l'allongement de la tige calibrée et des deux bretelles, ainsi qu'un moyen de signalisation à distance du franchissement d'une certaine valeur de déformation.

La tension des fils ou câbles s'exerce à l'extrémité des bras articulés par l'intermédiaire de rallonges et est retransmise, amplifiée par un effet de levier, à la tige à section calibrée par l'intermédiaire de deux tourillons articulés, de deux douilles entretoises, d'un tube de guidage et d'écrous et, aux bretelles fusibles, par l'intermédiaire d'axes, goupillés.

La tige calibrée est une tige filetée sur toute sa longueur, calibrée à fond de filet.

Les bretelles fusibles sont consituées de barrettes calibrées munies à chacune de leurs extrémités, d'un orifice de fixation.

Le moyen permettant la visualisation à distance de l'allongement de la tige à section calibrée et des bretelles fusibles est constitué d'un témoin échancré, monté sur l'extrémité des boulons de raccordement des bras aux rallonges, de façon que l'un des boulons puisse coulisser librement dans l'échancrure afin de libérer le dit témoin en basculement pour une valeur déterminée de l'allongement de la tige à section calibrée.

Le moyen de signalisation à distance du franchissement d'une certaine valeur de déformation est constitué d'une bretelle à rupture de contact électrique réalisée en matériau isolant, ayant une résistance très faible à la traction, combinée à un conducteur électrique imprimé ou incorporé reliant deux plots situés de part et d'autre de la zone de rupture.

Cette bretelle à rupture de contact électrique reliée par l'intermédiaire des plots à un circuit électrique, commande un signal lumineux ou sonore, ou une fonction de coupure ou d'enclenchement d'un circuit de commande, à un endroit précis de la course de détente du dispositif, correspondant sensiblement à la longueur d'une lumière dans laquelle coulisse l'un des axes de fixation de l'ensemble des bretelles.

Plusieurs dispositifs élémentaires peuvent être associés en série ou en séries parallèles en vue d'augmenter la course de détente ou/et la résistance à la déformation de l'ensemble.

D'autres caractéristiques et avantages apparaîtront dans la description qui va suivre d'un dispositif réalisé selon l'invention donné à titre d'exemple non limitatif au regard des dessins annexés sur lesquels:

La figure 1 représente, une vue de face en coupe partielle du dispositif avant déformation.

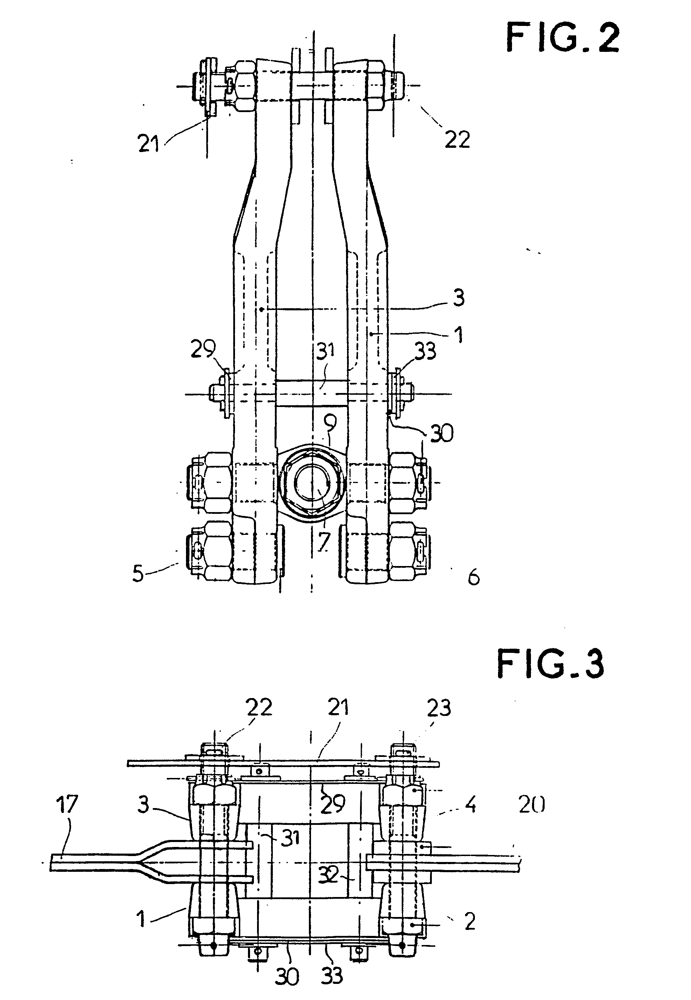

La figure 2 représente, une vue de côté du dispositif avant déformation.

La figure 3 représente, une vue de dessus du dispositif avant déformation.

La figure 4 représente, le schéma de montage d'un dispositif avec indication des positions extrêmes en trait fin.

La figure 5 représente, le schéma de montage de deux dispositifs montés en série, avec indication de positions extrêmes en trait fin.

La figure 6 représente, le schéma de montage de deux dispositifs en parallèle, avec indication des positions extrêmes en trait fin.

La figure 7 représente, le schéma de montage de quatre dispositifs en séries parallèles.

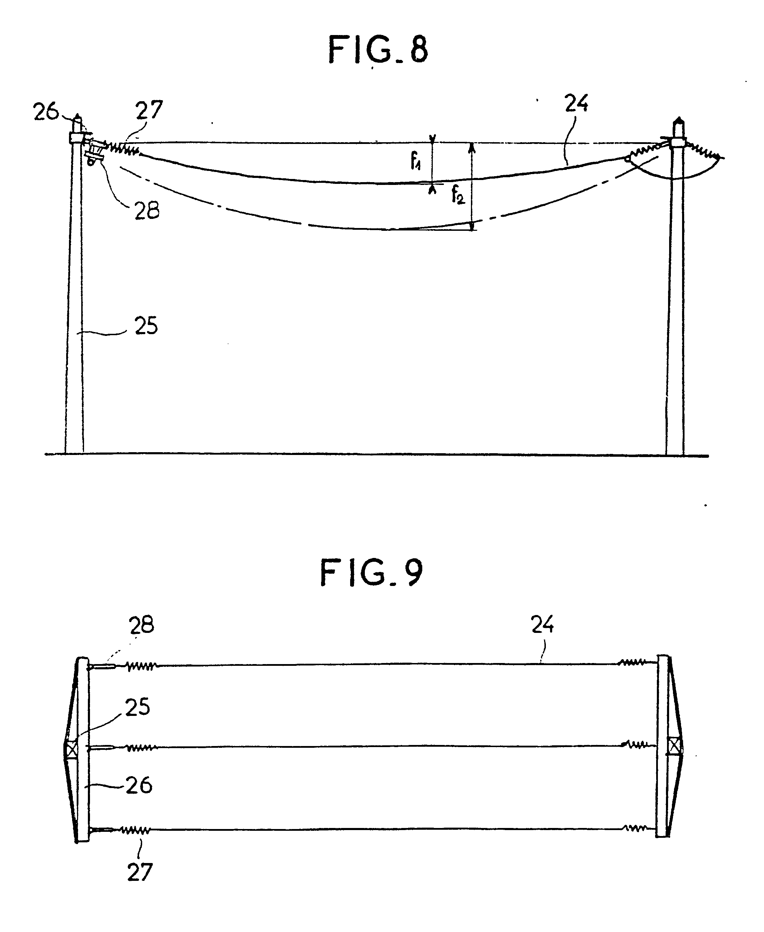

La figure 8 représente, une vue de face d'une partie de ligne, com-Prise entre deux poteaux, équipée de dispositifs simples selon l'invention.

La figure 9 représente, une vue de dessus d'une partie de ligne, comprise entre deux poteaux, équipée de dispositifs simples selon l'invention.

La figure 10 représente, la courbe de déformation d'un dispositif à bretelles fusibles de mêmes caractéristiques.

La figure 11 représente, une vue schématique de la bretelle à rupture de contact électrique.

La figure 12 représente, le schéma du système d'alarme et de commande électrique.

En examinant l'ensemble des figures, on remarque que le dispositif est constitué de quatre bras 1, 2, 3 et 4 articulés deux à deux par l'intermédiaire d'axes d'articulation boulonnés 5 et 6 et formant un système de compas dont l'écartement des branches est contrôlé par l'allongement en traction d'une tige à section calibrée 7, sous l'action de deux tourillons d'articulation boulonnés 8 et 9, de deux douilles entretoises 10 er 11, d'un tube de guidage 12 et d'écrous 13, 14, 15 et 16, et par l'allongement de deux bretelles fusibles 29 et 30 par l'intermédiaire d'axes 31 et 32.

L'effort de traction des fils est transmis à l'extrémité des bras 1, 2, 3 et 4, par l'intermédiaire d'une rallonge 17 fixée à l'armature 18 par un boulon à crochet 19 et par une ral, longe 20 reliée à l'isolateur ou à un autre dispositif.

L'allongement en traction de la tige à section calibrée 7 et des bretelles fusibles 29 et 30 est visualisé par l'intermédiaire d'un témoin de détente 21, muni d'une échancrure 21a montée à l'extrémité des boulons 22 et 23 de fixation des rallonges 17 et 20 de façon que l'un des boulons 22 puisse coulisser librement dans l'échancrure 21a.

Le franchissement d'une certaine valeur de déformation du dispositif est signalé à distance par l'intermédiaire d'une bretelle à rupture de contact électrique 33.

La ligne constituée de conducteurs 24, est supportée par des poteaux 25 équipés d'armatures 26, d'isolateurs 27 et de dispositifs à déformation contrôlée 28. Les conducteurs ont initialement une flèche f1, et une flèche f2 après fonctionnement du dispositif.

Ainsi, comme on voit, la traction exercée par les conducteurs 24 est transmise aux bras 1, 2, 3 et 4 de l'appareil et, à la tige calibrée 7 ainsi qu'aux bretelles fusibles 29 et 30 par l'intermédiaires des rallonges 17 et 20 et des boulons 22 et 23.

Lorsque la surcharge dépasse une valeur déterminée, la tige calibrée 7 et les bretelles fusibles 29 et 30 s'allongent, les bras articulés 1, 2, 3 et 4 s'écartent, le boulon 22 se déplace dans l'échancrure 21a du témoin de détente 21, ce qui permet de visualiser la déformation, et l'axe 31 se déplace dans la lumière 33a de la bretelle à rupture de contact électrique 33. Les conducteurs se trouvent alors détendus, et la flèche qu'ils forment se trouve augmentée jusqu'à obtention d'une situation d'équilibre entre l'effort élastique de traction exercé par la tige calibrée 7 et les bretelles fusibles 29 et 30, et l'effort de traction exercé par les conducteurs, compte-tenu du rapport des bras de levier.

Si la surcharge augmente encore, la tige calibrée 7 et les bretelles fusibles 29 et 30 continuent à s'allonger par déformation élastique, tout d'abord, ce qui permet aux bras de reprendre leur écartement d'origine et les conducteurs, leur flèche initiale, lorsque la surcharge cesse par fonte de la neige ou du givre, ou arrêt du vent.

Si la surcharge dépasse une valeur déterminée par les caractéristiques de la tige calibrée 7 et des bretelles fusibles 29 et 30, celles-ci se déforment de façon plastique, ce qui se traduit, tout d'abord, par une rupture des bretelles fusibles 29 et 30 pour une certaine valeur de la traction exercée par les conducteurs, puis, à l'extrême, par un allongement maximum permanent de la tige calibrée 7 correspondant à l'alignement des bras qui supportent alors à eux seuls, l'effort de traction. Le retour à l'écartement d'origine des bras et des conducteurs à leur flèche initiale, n'est plus alors automatique dès que la surcharge cesse et une intervention, visant à replier les bras par l'intermédiaire de moyens mécaniques appropriés et à remplacer la tige calibrée 7, les bretelles fusibles 29 et 30 et la bretelle à rupture de contact électrique 33 devient indispensable dès que les conditions atmosphériques sont redevenues normales.

Comme on le voit, la dimension de la section résistante de la tige calibrée 7 et des bretelles fusibles 29 et 30 et la longueur de la lumière 33a de la bretelle à rupture de contact électrique 33 sont déterminées, de façon précise, en fonction des bras de levier du système, de la matière dans laquelle sont confectionnées la tige calibrée 7 et les bretelles fusibles 29 et 30 et des efforts de déformation exercés.

La longueur de la tige calibrée 7 est déterminée de façon que, dans le cas extrême où le système se détend complètement, cela ne provoque pas la rupture complète, par striction, de la dite tige, afin d'éviter un choc dans le conducteur et sur l'armature.

La différence de distance entre la double longueur des bras et leur écartement initial donne la course de détente totale possible du conducteur.

L'utilisation des bretelles fusibles 29 et 30 en parallèle avec la tige calibrée 7 permet de maintenir la déformation de celle-ci dans le domaine élastique pour des efforts de traction plus importants; ce qui différe d'autant son remplacement.

Le témoin de détente 21 permet d'observer, depuis le sol, si la tige calibrée a dépassé sa déformation élastique. Ce témoin bascule lorsque le boulon 22 sort de l'échancrure 21a, c'est-à-dire pour une valeur déterminée de l'écartement des bras, ce qui indique que la tige calibrée 7 a subi une déformation plastique et doit être remplacée. Le passage de la déformation élastique à la déformation plastique de la tige calibrée 7 peut être immédiatement signalé par la rupture de la bretelle à rupture de contacr électrique 33 dans la mesure ou la longueur de la lumière 33a a été déterminée en conséquence.

La tige calibrée 7 est constituée d'une tige filetée, sur toute sa longueur, réalisée avec précision quant au diamètre du filetage à fond de filet. Ce diamètre est déterminé pour chaque lot de métal devant servir à la fabrication de chaque modèle de tige. La matière de cette tige calibrée 7 et son traitement thermique sont choisis en fonction des caractéristiques de traction et d'allongement pour chaque modèle, an fonction des efforts d'utilisation en ligne. Les différents modèles de tige sont numérotés et repérés par un code de couleur pour éviter les erreurs d'utilisation. Il en est de même pour les bretelles fusibles 29 et 30.

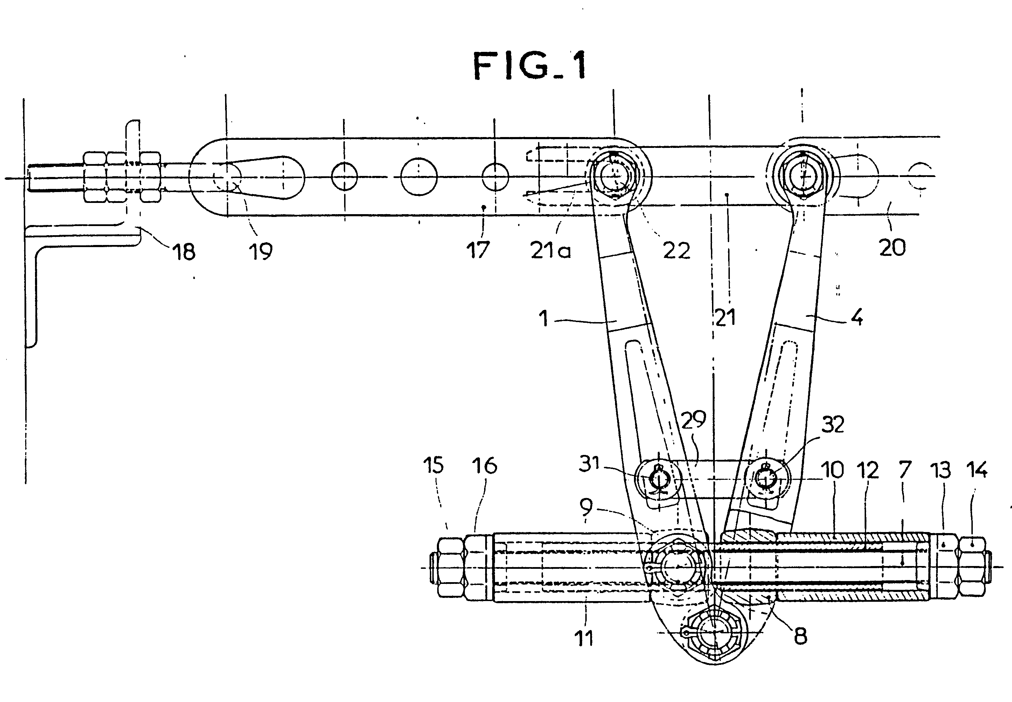

Si l'on se reporte à la figure 1, on remarque que la tige calibrée 7 est entourée d'un tube de guidage 12 dont la fonction est de maintenir la tige calibrée dans l'axe des tourillons, lors de sa déformation, et de centrer les douilles entretoises 10 et 11 dont la longueur est déterminée en fonction de celle de la tige calibrée 7, elle-même conditionnée par l'allongement désiré.

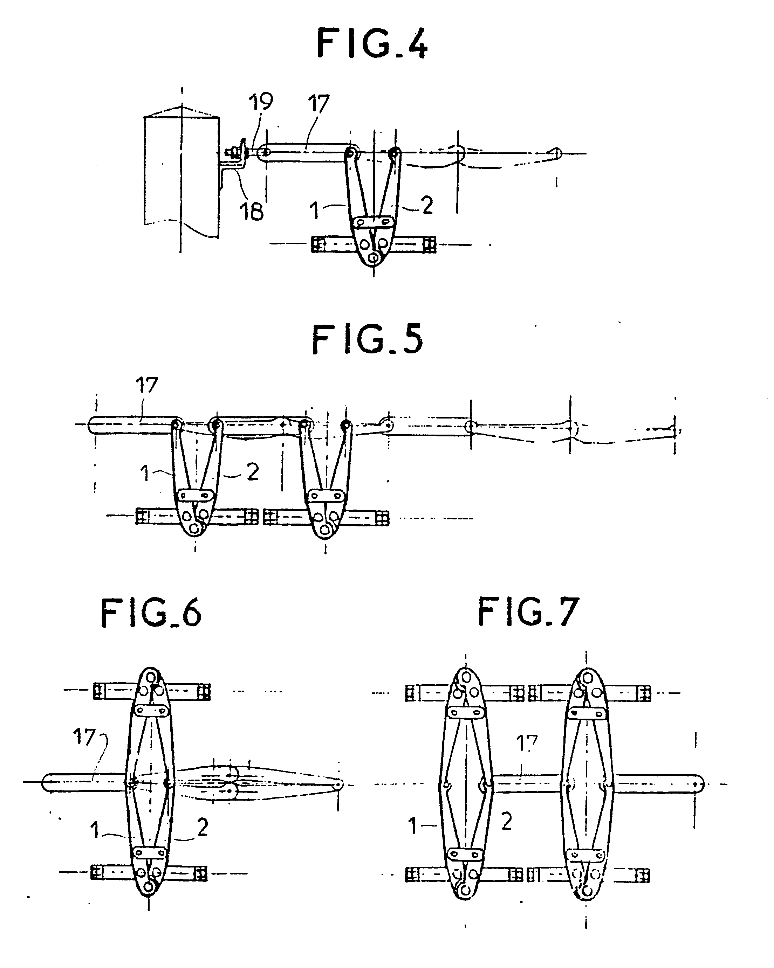

En se reportant aux figures 4, 5, 6 et 7, on remarque que peuvent être montés:
- un dispositif unique qui permet d'obtenir une course maximum de détente C sous un effort de traction F (fig. 4).
- deux appareils accouplés en série, qui permettent d'obtenir une course 2 C sous un effort F (fig. 5).
- deux appareils accouplés en parallèle, qui permettent d'obtenir une course C sous un effort 2 F (fig. 6).
- quatre appareils accouplés en séries parallèles, qui permettent d'obtenir une courçe 2 C sous un effort 2 F (fig. 7).

Ces modes de montage ne sont pas limitatifs et peuvent être reproduits autant de fois que les conditions l'imposent.

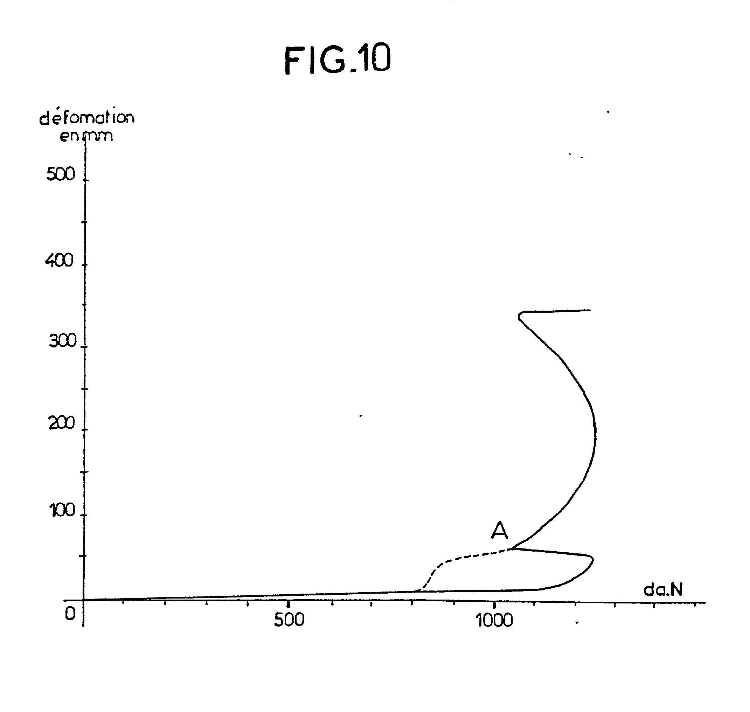

En se reportant à la figure 10, on remarque que l'utilisation des bretelles fusibles 29 et 30 modifie favorablement la courbe de déformation du système sous l'action de la traction des conducteurs en augmentant l'effort admissible avant déformation permanente de la tige calibrée 7 tout en conservant la valeur maximum de l'effort admissible avant déformation complète du dispositif. Ces bretelles fusibles 29 et 30 viennent donc fournir une résistance calibrée complémentaire quand la tige fusible 7 est dans la zone des déformations élastiques. La zone de passage de la déformation élastique en déformation plastique de la tige calibrée 7 est, avec les bretelles fusibles 29 et 30 reportée de 800 da.N à environ 1130 da.N comme le montre la courbe en pointillé représentant la déformation de la tige fusible 7 seule, Ainsi, la limite d'utilisation du dispositif avant changement de la tige fusible 7 est reportée de F à 1,7 F au minimum.

Après rupture des bretelles fusibles 29 et 30 l'effort de traction est entièrement supporté par la tige fusible 7 qui poursuit sa déformation plastique.

Pour éviter une modification trop brutale de la courbe de déformation résultante il est possible d'utiliser deux bretelles fusibles de caractéristiques différentes; ce qui permet d'obtenir un raccordement de courbe en escalier.

Ces bretelles fusibles sont constituées de plaques ou de tiges d'acier, d'aluminium, d'alliage d'aluminium ou d'autres matériaux, en fonction de la courbe de déformation résultante à obtenir.

Pour obtenir des allongements plus importants en vue de faire varier la position du point A de raccordement de la courbe résultante à la courbe principale il est possible d'ovaliser les orifices de passage des axes 31 et 32 ou d'accroître le jeu entre les orifices et les axes.

La mise en phase des efforts de traction exercés sur la tige calibrée 7 et sur les bretelles 29 et 30 est à déterminer en fonction de la courbe résultante à obtenir. Cette mise en phase peut être obtenue par serrage des écrous 13 et 16 de la tige calibrée 7 jusqu'à ce que les axes 31 et 32 viennent prendre appui contre le bord des orifices de passage des axes 31 et 32 des bretelles 29 et 30. Le jeu existant entre les orifices et les axes 31 et 32 permet d'obtenir une pre-tension de la tige calibrée 7 avant l'obtention des sollicitations complémentaires.

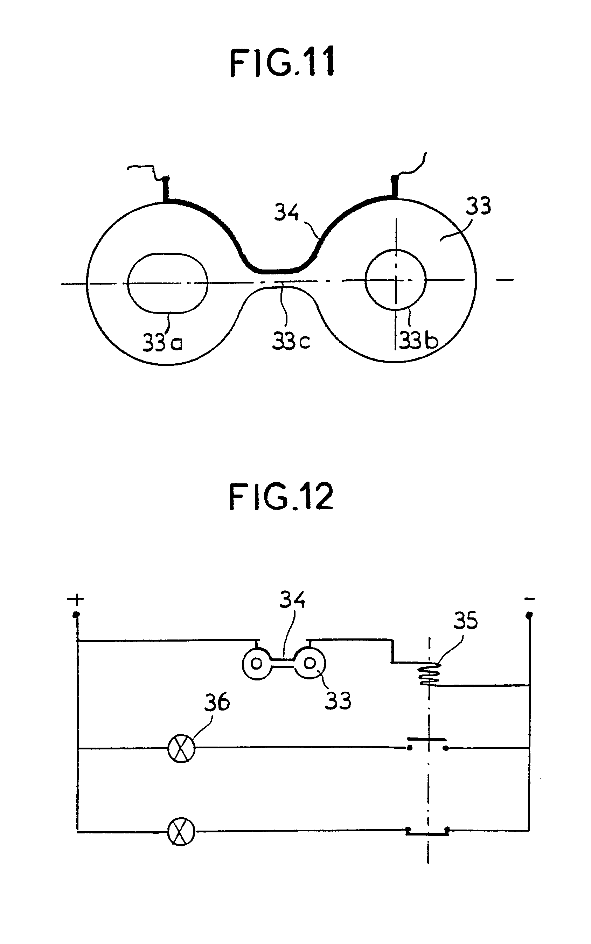

En se reportant à la figure 11, on remarque que la bretelle à rupture de contact électrique 33 est constituée d'une barrette en matière isolante munie d'un circuit électrique imprimé 34 et de deux orifices de passage 33a et 33b des axes 31 et 32, dont l'un, 33a, est constitué d'une lumière permettant le libre débattement de l'axe 31 au cours de la déformation élastique de la tige calibrée 7 jusqu'à mise en contact de l'axe 31 avec l'extrémité extérieure de la lumière 33a: ce qui entraîne quasi immédiatement la rupture de la partie centrale 33c et la rupture du circuit électrique imprimé 34.

En se reportant au schéma de la figure 12, on remarque que selon un mode de réalisation donné à titre d'exemple, la rupture de la bretelle à contact électrique 33 entraîne le fonctionnement d'un relai de mise sous tension 35, et d'une alarme lumineuse 36.

Comme on le voit, le dispositif est défini en fonction de la résistance du câble ou conducteur et de celle de l'armature et du poteau support. Il peut donc protéger efficacement l'ensemble.

Le dispositif à déformation contrôlée selon l'invention, est destiné principalement à équiper les lignes électriques à basse, moyenne et haute tension, mais il peut être utilisé aussi avec profit pour le détensionnement de toutes sortes de fils ou de câbles dont la surcharge provisoire est susceptible d'entraîner la détérioration ou la déformation permanente des supports.

## Revendications

1. Dispositif à déformation contrôlée permettant de réduire les contraintes exercées sur les conducteurs (24) et les poteaux (25) de lignes électriques par détensionnement des conducteurs (24) et augmentation de leur flèche entre les poteaux, (25) caractérisé en ce qu'il est constitué de quatre bras (1, 2, 3 et 4) articulés deux à deux pour former deux compas dont l'écartement des branches, sous l'action de la tension des fils ou câbles, est contrôlé par l'allongement en traction d'une tige à section calibrée (7) et de bretelles fusibles (29 et 30) et en ce qu'il comporte un moyen (21) permettant de visualiser l'allongement de la tige à section calibrée (7) et un moyen (33) permettant de signaler à distance le franchissement d'une certaine valeur de déformation du dispositif.

2. Dispositif à déformation contrôlée, selon la revendication 1, caractérisé en ce que la tension des fils ou câbles, exercés à l'extrémité des bras articulés (1, 2, 3 et 4), par l'intermédiaire de rallonges (17 et 20), est transmise, amplifiée par un effet de levier, à la tige de section calibrée (7), par l'intermédiaire de deux tourillons articulés (8 et 9), de deux douilles entretoises (10 et 11) d'un tube de guidage (12) et d'écrous (13, 14, 15 et 16) et aux bretelles fusibles (29 et 30), par l'intermédiaire d'axes goupillés (31 et 32).

3. Dispositif à déformation contrôlée, selon les revendications 1 et 2, caractérisé en ce que la tige à section calibrée (7), est une tige filetée sur toute sa longueur, calibrée à fond de filet.

4. Dispositif à déformation contrôlée selon la revendication 1, caractérisé en ce que les bretelles fusibles (29 et 30) sont constituées de barrettes métalliques de section et de résistance à la rupture déterminées.

5. Dispositif à déformation contrôlée selon les revendications 1 et 4, caractérisé en ce que la section et la résistance à la rupture des bretelles fusibles (29 et 30) sont déterminées pour que la déformation permanente de la tige calibrée (7) n'intervienne que pour un effort de traction très supérieur à celui qui aurait été nécessaire pour obtenir la déformation plastique de la tige calibrée (7) seule, et pour que leur rupture se produise avant la déformation maximum du dispositif.

6. Dispositif à déformation contrôlée selon les revendications 4 et 5 caractérisé en ce que les caractéristiques d'allongement de chacune des bretelles fusibles (29 et 30) sont différentes.

7. Dispositif à déformation contrôlée, selon la revendication 1, caractérisé en ce que le moyen permettant de visualiser l'allongement de la tige à section calibrée (7) est constitué d'un témoin (21), muni d'une échancrure (21a), monté à l'extrémité des boulons (22 et 23) de raccordement des bras aux rallonges (17 et 20) de façon que l'un des boulons (22) puisse coulisser librement dans l'échancrure (21a) et libérer le dit témoin (21) en basculement pour une valeur déterminée de l'allongement de la tige à section calibrée (7).

8. Dispositif à déformation contrôlée selon la revendication 1, caractérisé en ce que le moyen permettant de signaler à distance le franchissement d'une certaine valeur de déformation du dispositif est constitué d'une bretelle isolante à rupture de contact electrique (33) montée sur les axes de fixation des bretelles fusibles (29 et 30) par l'intermédiaire d'un orifice circulaire (33b) et d'une lumière (33a).

9. Dispositif à déformation contrôlée selon les revendications 1 et 8 caractérisé en ce que la longueur de la lumière (33a) est déterminée pour que la rupture de la bretelle (33) intervienne pour une valeur déterminée de la déformation du dispositif.

10. Dispositif à déformation contrôlée selon la revendication 1, caractérisé en ce que plusieurs dispositifs peuvent être associés en série ou en séries parallèles en vue d'augmenter la course de détente ou/et la résistance à la déformation de l'ensemble.

## Patentansprüche

1. Vorrichtung mit kontrollierter Verformung zur Sicherung von Leitungen (24) und elektrischen Linienstangen (25) gegen Überbeanspruchungen durch Leitungsentspannung und Vergrösserung des Kabeldurchhangs zwischen den Stangen, bezeichnet dadurch, dass sie aus vier Armen (1, 2, 3 und 4) besteht, die gelenkpaarweise um zwei Zirkel stehen, deren Armenabstand, unter Wirkung der Draht- oder Kabelspannung durch das Verlängern einer kalibrierten Schnittspindel (7) und Sicherungstragbändern (29 und 30), kontrolliert ist und ein Sichtmittel für das Verlängern der Spindel (7) sowie ein Fernbezeichnungsmittel (33) für das Überschreiten eines gewissen Wertes von Vorrichtungsverformung einschliesst.

2. Vorrichtung mit kontrollierter Verformung gemäss Patentanspruch 1, bezeichnet dadurch, dass die am Ende der Gelenkarmen (1, 2, 3 und 4) ausgeübte Draht- oder Kabelspannung durch Verlängerungen (17 und 20) übertragen und durch eine Hebelwirkung an die kalibrierte Schnittspindel (7) durch zwei gelenkverbundenen Drehzapfen (8 und 9), zwei Abstandfassungen (10 und 11) und ein Führungsrohr (12) und Schraubringe (13, 14, 15 und 16) und an die Sicherungstragbänder (29 und 30) mit Stiften befestigte Achsen (31 und 32) vergrössert wird.

3. Vorrichtung mit kontrollierter Verformung gemäss Patentanspruch 1 und 2, bezeichnet dadurch, dass die kalibrierte Spindel (17) eine gründlich kalibrierte Schraubspindel auf die Gesamtlänge ist.

4. Vorrichtung mit kontrollierter Verformung gemäss Patentanspruch 1, bezeichnet dadurch, dass die Sicherungstragbänder (29 und 30) aus Metallstangen mit bestimmtem Schnitt und Bruchwiderstand.

5. Vorrichtung mit kontrollierter Verformung gemäss Patentansprüchen 1 und 4, bezeichnet dadurch, dass der Schnitt und der Bruchwiderstand der Sicherungstragbänder (29 und 30) so bestimmt sind, dass die ständige Verformung der kalibrierten Spindel (7) nur im Falle einer viel höheren als die für die plastische Verformung der kalibrierten Spindel (7) notwendige Zugkraft entsteht und dass ihr Bruch vor der grössten Vorrichtungsverformung vorkommt.

6. Vorrichtung mit kontrollierter Verformung gemäss Patentansprüchen 4 und 5, bezeichnet dadurch, dass die Verlängerungskarakteristiken jedes Sicherungstragbandes (29 und 30) verschieden sind.

7. Vorrichtung mit kontrollierter Verformung gemäss Patentanspruch 1, bezeichnet dadurch, dass das Sichtmittel für das Verlängern der kalibrierten Spindel (7) einen Vermerk (21) mit einem Ausschnitt (21a) versehen einschliesst, der am Ende der Verbindungsbolzen (22 und 23) von den Armen zu den Verlängerungen (17 und 20), montiert ist, so dass einer der Bolzen (22) im Ausschnitt (21a) frei durchgehen kann und den sogenannten Vermerk (21) befreit und zum Schwanken für eine bestimmte Verlängerung des kalibrierten Spindel (7) bringt.

8. Vorrichtung mit kontrollierter Verformung gemäss Patentanspruch 1, bezeichnet dadurch, dass das Fernbezeichnungsmittel für das Überschreiten eines gewissen Wertes von Vorrichtungsverformung aus einem isolierenden Tragband mit elektrischem Kontaktbruch (33) besteht, montiert auf der Festsetzungsachsen der Sicherungstragbänder (29 und 30) durch eine Kreisöffnung (33b) und ein Licht (33a).

9. Vorrichtung mit kontrollierter Verformung gemäss Patentansprüchen 1 und 8, bezeichnet dadurch, dass die Länge des Lichtes (33a) so bestimmt ist, dass der Bruch des Tragbandes (33) für einen bestimmten Wert der Vorrichtungsverformung vorkommt.

10. Vorrichtung mit kontrollierter Verformung gemäss Patentanspruch 1, bezeichnet dadurch, dass mehrere Vorrichtungen hintereinander oder in Parallelreihen vereinigt sein können, um der Abspannungsgang oder/und der Verformungswiderstand des Ganzen zu vergrössern.

## Claims

1. Apparatus with controlled deformation for the reduction of restraints on the conducting materials (24) and the electric power posts (25) by slackening of conducting materials (24) and increasing of their dip between the electric power post (25), wherein it is constituted of four arms (1,2,3 and 4) articulated two by two in order to form two compasses, the legs space of which, in the action of the tension of the wires or cables, is controlled by the pulling lengthening of a calibrated section rod (7) and of fusible straps (29 and 30) and wherein it has a means (21) permitting to a firld vision of the lengthening of the calibrated section rod (7), and a means (33) permitting to signalize the exceeding of a certain value of the apparatus deformation.

2. Apparatus with controlled deformation, according to the claim 1, wherein the tension of wires or cables exerted at the articulated arms end (1, 2, 3 and 4) through the lengthening pieces (17 and 20), is transmitted, amplified by an effect of lever to the calibrated section rod (7), through two articulated journals (8 and 9), of two braced sleeves (10 and 11) of a guiding tube (12) and of nuts (13,14,15 and 16), and to the fusible straps (29 and 30) through pined axles (31 and 32).

3. Apparatus with controlled deformation according to the claims 1 and 2, wherein the calbrated section rod (7) is a rod threaded on all length, calbrated at bottom of thread.

4. Apparatus with controlled deformation, according to the claim 1, wherein the fusible straps (29 and 30) are constituted of metallic connecring strips of section and of determinated ultimate stress.

5. Apparatus with controlled deformation, according to the claims 1 and 4, wherein the section and the ultimate stress (29 and 30) are determinated in order that the permanent deformation of the calibrated rod intervene only for a pull very superior to the one which had been necessary in order to achieve the plastic deformation of the calibrated rod (7), and in order that the ultimate stress occurs before the maximum deformation of the apparatus.

6. Apparatus with controlled deformation, according to the claims 4 and 5, wherein the characteristics of lengthening of each of the fusible straps (29 and 30) are different.

7. Apparatus with controlled deformation, according to the claim 1, wherein the means permitting to see the lengthening of the calibrated section rod (7)is constituted of warning light (21), provided with a nick (21a) mounted at the end of the bolts (22 and 23) of the joining of the arms, to the lengthenings (17 and 20) so as that one of the bolts (22) may free slide in the

nick (21a), and to release the said warning light (21) rocking for a determinated value of the lengthening of the calibrated section rod (7).

8. Apparatus with controlled deformation, according to the claim 1, wherein the means permitting to signalize at range, the exceeding of a certain value of deformation of the apparatus, is constituted of an insulating strap breaking of electrical connection (33), mounted on the axles of the strap fixation (29,30), through a circular orifice (33b) and a light (33a).

9. Apparatus with conrolled deformation, according to the claims 1 and 8, wherein the length of the light (33a) is determined in order that the breaking of the strap (33) intervene for determined value of the deformation of the apparatus.

10. Apparatus with controlled deformation, according to the claim 1, wherein that several apparatuses can be connected in series or in paralell series with a view to increase the expansion stroke or/and the resistance to the deformation of the whole lot.

# FIG_1

0 161 121

**FIG.2**

**FIG.3**

# FIG.4

# FIG.5

# FIG.6

# FIG.7

# FIG.8

# FIG.9

# FIG.10

# FIG.11

# FIG.12